# EUROPEAN PATENT APPLICATION

(11) **EP 2 219 228 A1**
(43) Date of publication of application: **18.08.2010**
(21) Application number: 09425048.7
(22) Date of filing: 11.02.2009
(51) Int. Cl.: H01L 31/048

(54) **Building roof and strip shaped solar module**

(71) Applicant: SAVIO S.p.A., 10050 Chiusa San Michele (IT)
(72) Inventor: Balbo di Vinadio, Aimone, 10050 Chiusa San Michele (Torino) (IT); Palazzetti, Mario, 10050 Chiusa San Michele (Torino) (IT)
(74) Representative: Marchitelli, Mauro

(57) **Abstract**

The invention relates to the roof of a building, comprising a plurality of linear arrays (86) of parallel curved tiles (84) set at a distance from one another in a transverse direction, in which a plurality of strip-shaped photovoltaic panels (10) is provided set between said adjacent arrays (84). The invention moreover regards a solar module for the conversion of solar radiation into electrical or thermo-electrical energy, substantially having the form of an elongated strip.

## Description

### Background of the invention

The present invention regards a roof of a building equipped with solar modules. In the following of the description and in the ensuing claims by the term "solar module" is meant any device for the conversion of solar radiation into electrical energy, thermal energy, or for the joint production of electrical and thermal energy. Hence falling within said definition are photovoltaic panels, thermal panels and integrated thermo-photovoltaic panels.

The invention moreover regards a solar module particularly suited to the construction of a roof according to the invention.

### Description of the known art

Currently, installation of a photovoltaic or thermal system on the roof of a building poses serious problems from the standpoint of landscaping. The problem is particularly felt for roofs of buildings located in historic centres. With current solutions, photovoltaic or thermal panels considerably alter the landscape and are difficult to integrate from the architectural standpoint with the traditional roofs of historic buildings made of curved tiles.

There have already been proposed solutions tending to favour the integration of photovoltaic elements in the roofs of buildings. For example, EP-A-884432 describes a photovoltaic device integrated in a tile for roofs of buildings. This known solution does not, however, solve the problem of the integration of photovoltaic systems in roofs of historic buildings in which the curved tiles represent a fundamental component of the landscape.

Furthermore, the standards adopted by many countries impose the obligation of equipping new dwellings with thermo-photovoltaic systems in proportion to the number of dwellings. Frequently, the space available on the roof is not sufficient for installation of thermo-photovoltaic systems to the extent envisaged by the standards.

### Summary of the invention

The object of the present invention is to provide a photovoltaic or thermo-photovoltaic system that can be integrated in the roofs of historic buildings maintaining an architectural consistency and a high energetic efficiency and can be advantageously used also for new buildings.

According to the present invention, said object is achieved by a roof having the characteristics forming the subject of Claim 1.

The invention moreover relates to a solar module having the characteristics forming the subject of Claims 8-11.

The present invention envisages providing a roof by means of a plurality of linear arrays of curved tiles set with their concave surfaces facing downwards. The arrays of curved tiles are parallel to and set at a distance from one another and set according to the lines of maximum inclination of the roof. A plurality of solar modules in the form of strips are set between the adjacent arrays of curved tiles.

The system is suited to being installed starting from the horizontal roof frame both of conventional roofs and of roofs in which said roof frame is integrated with the insulating elements.

As compared to traditional roofs with curved tiles, there are alternately removed alternate arrays of curved tiles, and the arrays removed are replaced by solar modules the width of which is substantially the same as the width of an array of curved tiles.

The roof according to the present invention is formed by an alternation of arrays of curved tiles and solar modules. A solution of this type enables reduction of the impact on the landscape of the solar-radiation system and enables with greater ease integration of the solar-radiation system in the roofs of buildings, especially in the case of buildings located in historic centres.

### Brief description of the drawings

The present invention will now be described in detail with reference to the attached drawings, which are provided purely by way of non-limiting example and in which:
- Figure 1 is a perspective view of a thermo-photovoltaic panel used for the construction of a roof according to the present invention;
- Figure 2 is an exploded perspective view of the panel of Figure 1;
- Figure 3 is a perspective view of a roofing element used for the construction of a roof according to the present invention;
- Figure 3a is a perspective view at a larger scale of the detail indicated by the arrow III in Figure 3;
- Figures 4 and 5 are perspective views of two components used for the construction of a roof according to the present invention;
- Figures 6 to 11 are perspective views illustrating the sequence of assembly of a roof according to the present invention;
- Figures 7a to 11a are details at a larger scale of the parts indicated, respectively, by the arrows VII to XI in Figures 7 to 11; and
- Figure 12 is a perspective view of a finished roof according to the present invention.

### Description of a preferred embodiment

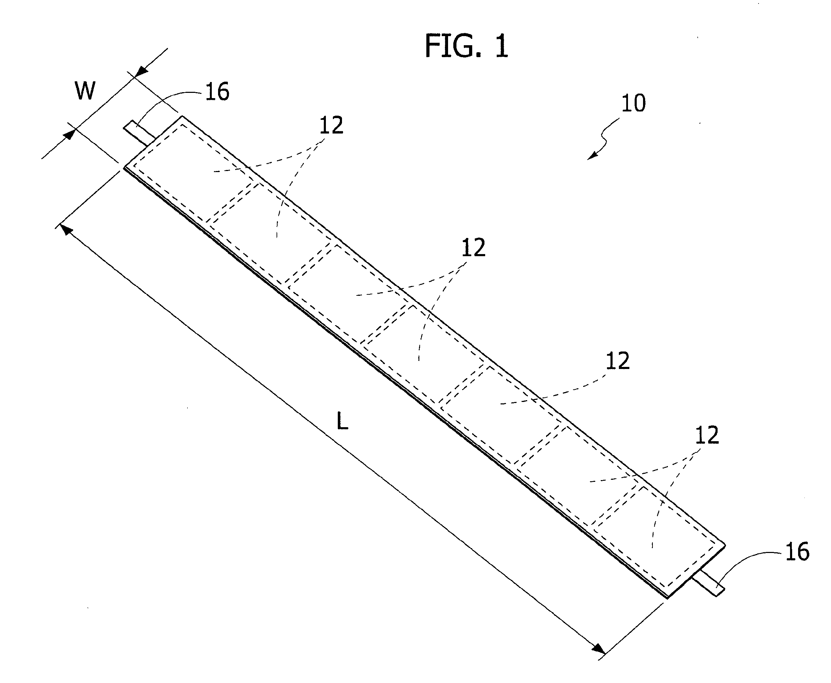

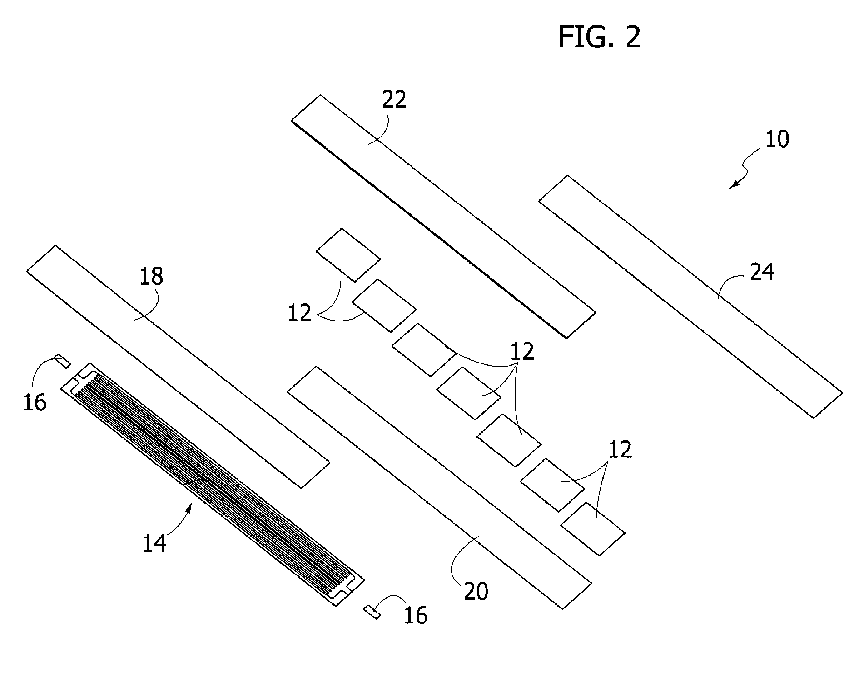

With reference to Figures 1 and 2, designated by 10 is a strip-shaped solar module according to the present invention. The solar module 10 has been developed in particular with a view to its application in a roof according to the present invention, formed by solar modules in the form of strips alternating with arrays of curved tiles. However, the strip-shaped solar module 10 according to the invention can also be used in other applications. For example, the solar module 10 could be used for devices for shielding windows and, in general, in all the cases where there are narrow and long surfaces that can be equipped with photovoltaic systems for the production of electrical energy.

The solar module 10 comprises a single array of photovoltaic cells 12 aligned with respect to one another in a longitudinal direction. Consequently, the width W of the solar module 10 is just a little greater than the standard width of a cell 12, and the length L of the solar module 10 is just a little greater than an integer multiple of the length of each standard photovoltaic cell 12. The photovoltaic cells used for the production of solar panels have a standard dimension of 156 x 156 mm. The width W of the solar module 10 is in the region of 17.5 cm. The solar module 10 can be equipped with 3-10 photovoltaic cells 12 aligned with respect to one another in a longitudinal direction. In the embodiment illustrated in Figures 1 and 2, the panel 10 is formed by seven photovoltaic cells 12 aligned with respect to one another in a single array.

With reference to Figure 2, the solar module 10 comprises a basic support, which can be constituted by a panel of a roll-bond type 14. The roll-bond panel 14 is equipped with channels for the circulation of a heat-exchange fluid and is provided at its ends with hydraulic connectors 16. Preferably applied on the top surface of the roll-bond panel 14 is a coloured backsheet 18. Applied on the backsheet 18 is a layer of plastic material 20, for example EVA. Applied on the layer of EVA 20 is the array of photovoltaic cells 12, which is coated with a second layer of plastic material 22, which is also preferably made of EVA. Applied on the layer 22 is a transparent protective plate 24, preferably made of glass.

The components of the solar module 10 are set on top of one another so as to form a sandwich structure. The mutual fixing of the components of the solar module 10 is obtained by means of hot compression in a laminated press, in which the components are compressed at a temperature (for example, in the region of 150°C), at which a partial softening of the layers of plastic material 18, 22 is obtained, which, with the subsequent cooling and hardening, bring about mutual fixing of the roll-bond panel 14, of the photovoltaic cells 12, and of the transparent plate 24.

The photovoltaic cells 12 can be electrically connected to one another in series or in parallel. The electrical connection between the cells 12 is made by means of electrical conductors (not illustrated) connected to a pair of electrical terminals (not illustrated).

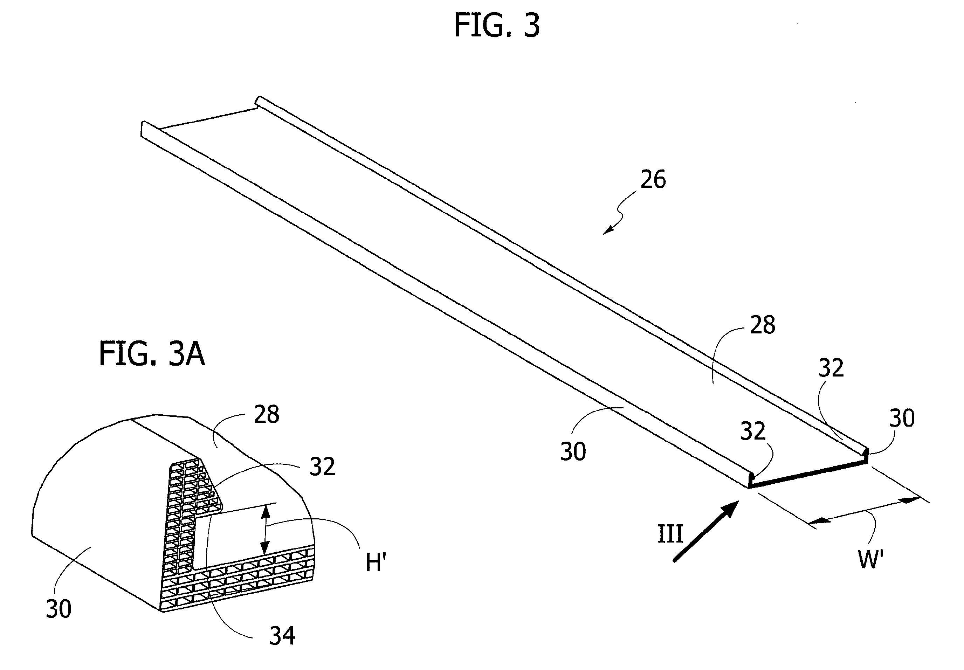

With reference to Figure 3, designated by 26 is a roofing element designed to be used for the construction of a roof according to the present invention. The roofing element 26 has the form of a shallow channel elongated in a longitudinal direction and comprises a plane base 28 and two side walls 30. As illustrated in Figure 3a, the roofing element 26 could be made of plastic material with an alveolar structure, with a plurality of small channels that extend in a longitudinal direction. Alternatively, the roofing element 26 could have a full cross section. The side walls 30 of the roofing element 26 have the form of an undercut, with an inclined longitudinal edge 32, which forms a step 34 parallel to the base 28. The side walls 30 have external plane surfaces orthogonal to the base 28.

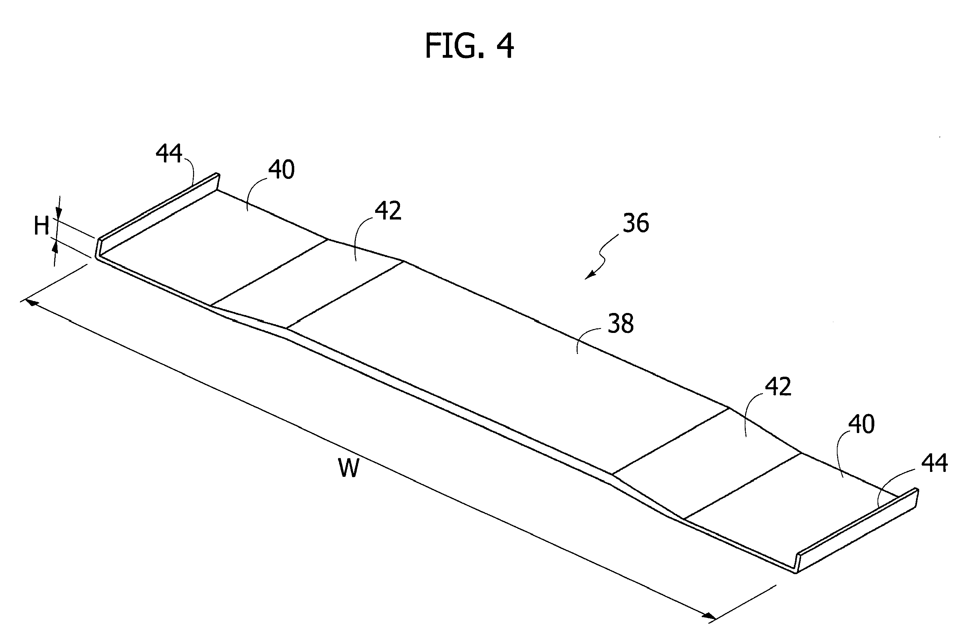

With reference to Figure 4, designated by 36 is a joint covering designed to be used for construction of the roof according to the invention. The joint covering 36 substantially has the shape of a strip with a central portion 38 and two plane side portions 40. The central portion 38 is raised with respect to the two plane side portions 40. The ends of the central portion 38 are connected to the respective side portions 40 by means of inclined sections 42. The side portions 40 are provided with respective edges 44 bent upwards at 90°. The width W of the joint covering element 36 is substantially equal to the width W' (Figure 3) between the internal surfaces facing one another of the side walls 30 of the roofing element 26. The height H of the edges 44 is equal to or less than the distance H' (Figure 3) between the step 34 and the base 28.

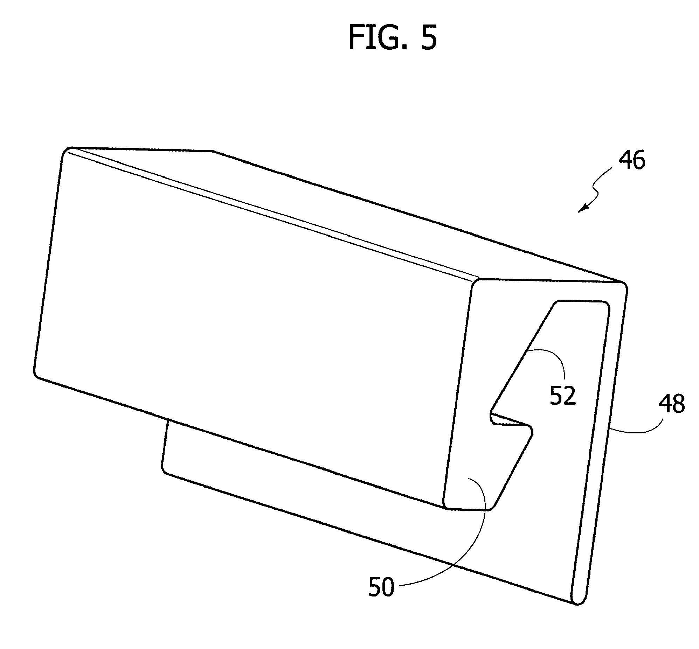

With reference to Figure 5, designated by 46 is an anchoring bracket used for the construction of a roof according to the present invention. The bracket 46 has a plane wall 48, integrally connected to an engagement portion 50. The engagement portion 50 defines an engagement seat 52 open downwards having a shape and dimensions complementary with respect to the longitudinal edge 32 (Figure 3) of each side wall 30 of the roofing element 26.

Described in what follows is the sequence of construction of a roof according to the present invention.

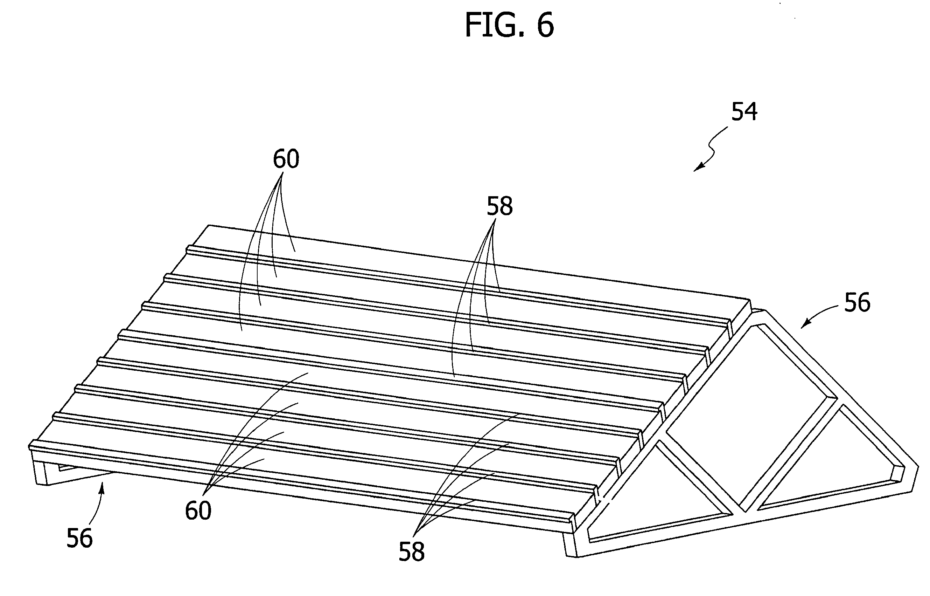

With reference to Figure 6, designated by 54 is the base structure of the roof of a building. The base structure 54 comprises two or more trusses 56 that define two inclined pitches. Applied on each pitch is a plurality of wooden laths 58 set horizontally and at a distance from one another along the respective pitch. The wooden laths 58 are fixed to the inclined sides of the trusses 56 in a conventional way, for example by means of nails or screws. Set between each pair of laths 58 is a layer of insulating material 60.

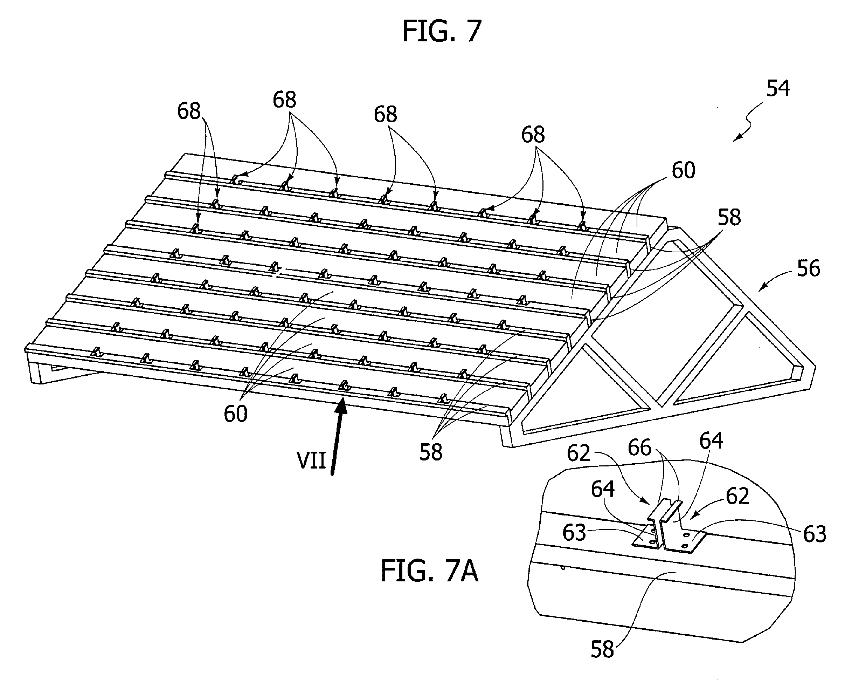

With reference to Figures 7 and 7a, fixed on the top surfaces of the laths 58 is a plurality of anchoring members 62. With reference to Figure 7a, each anchoring member 62 comprises a base 63 fixed to the top surface of the respective lath 58 (for example, by means of screws or nails), a wall 64 orthogonal to the base 63, and a head edge 66. The anchoring members 62 are fixed on the laths 58 in pairs, with the members of each pair set in a specular way and with the respective walls 64 parallel and set at a slight distance apart from one another, as illustrated in Figure 7a. The pairs of anchoring members 62 are set in parallel arrays 68. In each array 68 the pairs of anchoring members 62 are aligned in the direction of maximum inclination of the pitch. The arrays 68 are set at a distance from one another in a horizontal direction. The distance between the arrays 68 is substantially equal to the width of each roofing element 26.

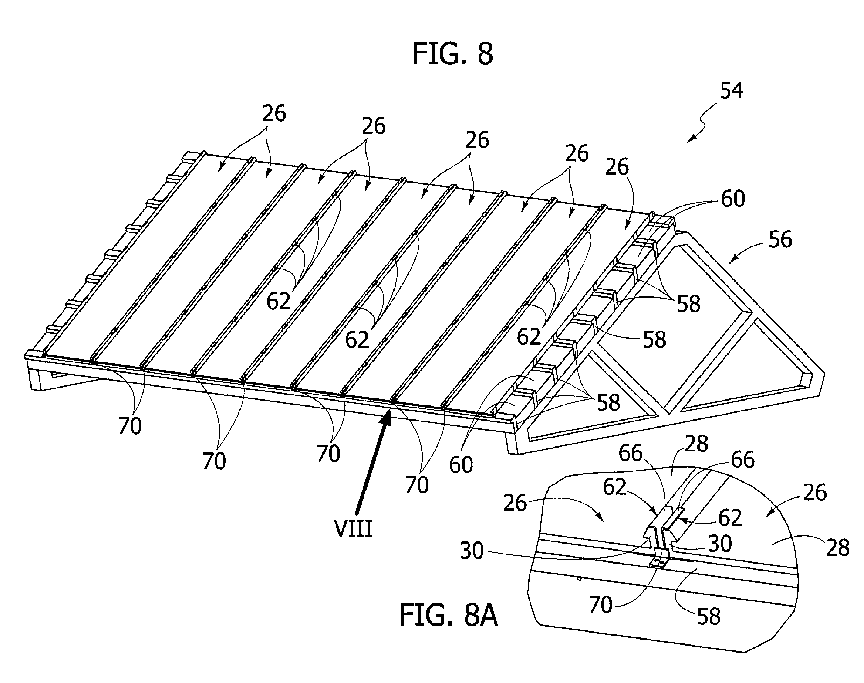

With reference to Figure 8, after fixing of the arrays of anchoring members 62, as illustrated in Figure 7, applied on at least one pitch of the roof undergoing construction are the roofing elements 26. The longitudinal direction of the roofing elements 26 is parallel to the direction of maximum inclination of the pitch. The side walls 30 of the roofing elements 26 are set adjacent to the walls 64 of the anchoring members 62. As illustrated in detail of Figure 8a, the head edge 66 of each anchoring member 62 sets itself on top of the top edge of the side wall 30 of a roofing element 26. To withhold the roofing elements 26 in position, fixed on the bottom lath 58 are L-shaped brackets 70 that form contrast members for the bottom edges of the roofing elements 26.

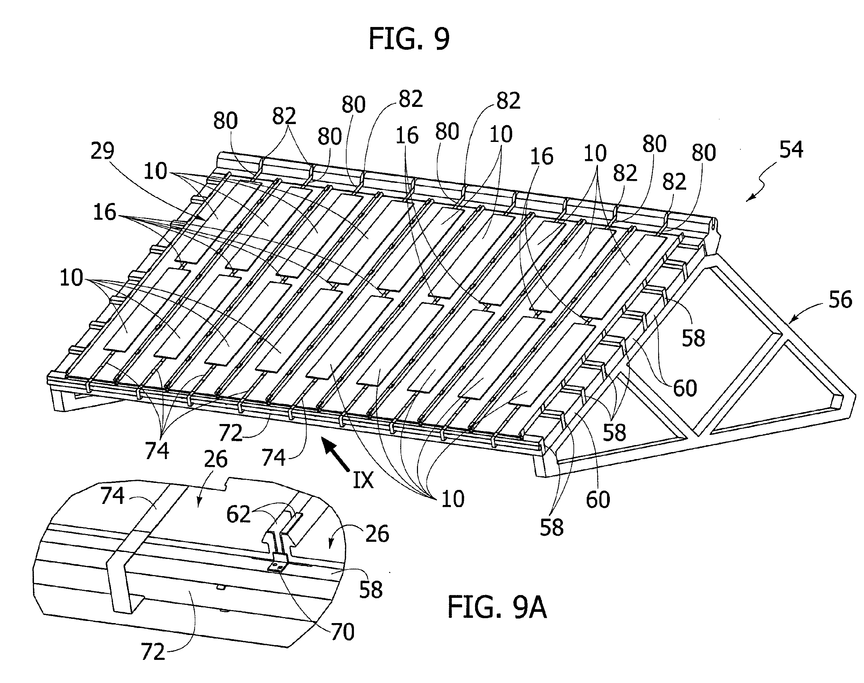

Next, as illustrated in Figure 9, the solar modules 10 are positioned on the roofing elements 26. The solar modules 10 are set along the lines of maximum inclination of the pitch. Housed in each roofing element 26 are two or more solar modules 10 aligned with respect to one another in the longitudinal direction of the respective roofing element 26. The solar modules 10 of each roofing element 26 are connected hydraulically in series to one another by means of the respective hydraulic connectors 16. The solar modules 10 adjacent to the bottom edge of the roof are hydraulically connected to a first manifold 72 by means of hydraulic pipes 74 (Figure 9a). The first manifold 72 is fixed to the bottom lath 58. The solar modules 10 adjacent to the top edge of the pitch are connected hydraulically to a second manifold (not visible in the drawings), which extends within a ridge pole 78 positioned at the top of the roof. The top solar modules are connected to the second manifold by means of hydraulic ducts 80, which extend through transverse slits 82 made in the ridge pole 78. The solar modules are moreover connected electrically to electrical conductors housed in the ridge pole 78.

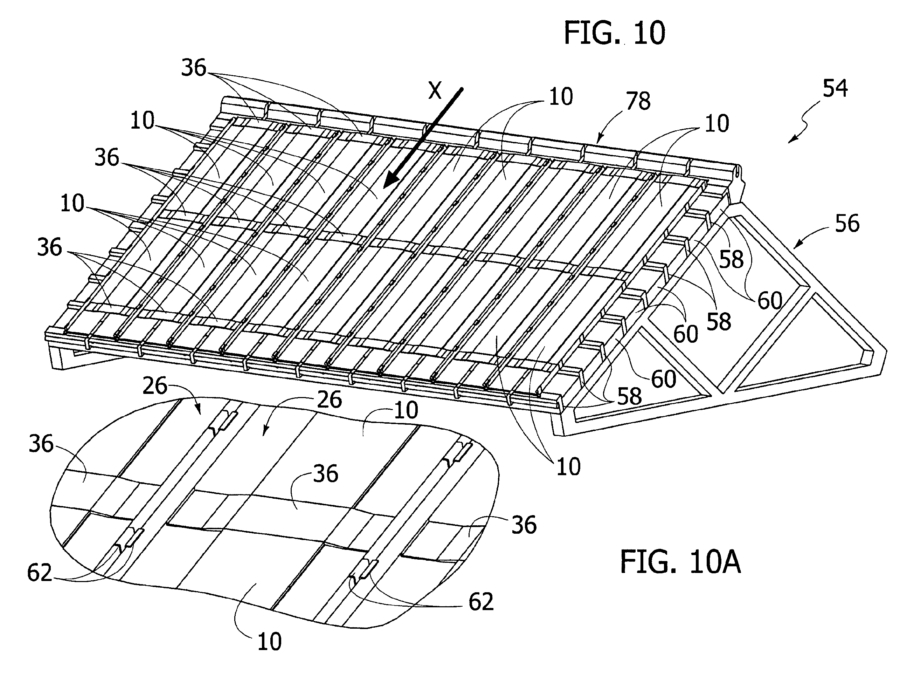

In the next step, illustrated in Figures 10 and 10a, the joint coverings 36 are positioned at the top and bottom ends of each solar module 10. The central part 38 of each joint covering 36 extends on top of the respective connector 16 of the solar module 10. The side portions 40 of each joint covering 36 are positioned on the plane base of the respective roofing element 26. The raised edges 44 of each joint covering 36 are positioned against the internal surfaces of the side walls 30 of the roofing elements 26. The joint coverings 36 have the function of fixing the solar modules 10 to the roofing elements 26 and of covering the areas of joining between the solar modules 10 and the areas adjacent to the top and bottom ends of the pitch to provide a continuity from the aesthetic standpoint.

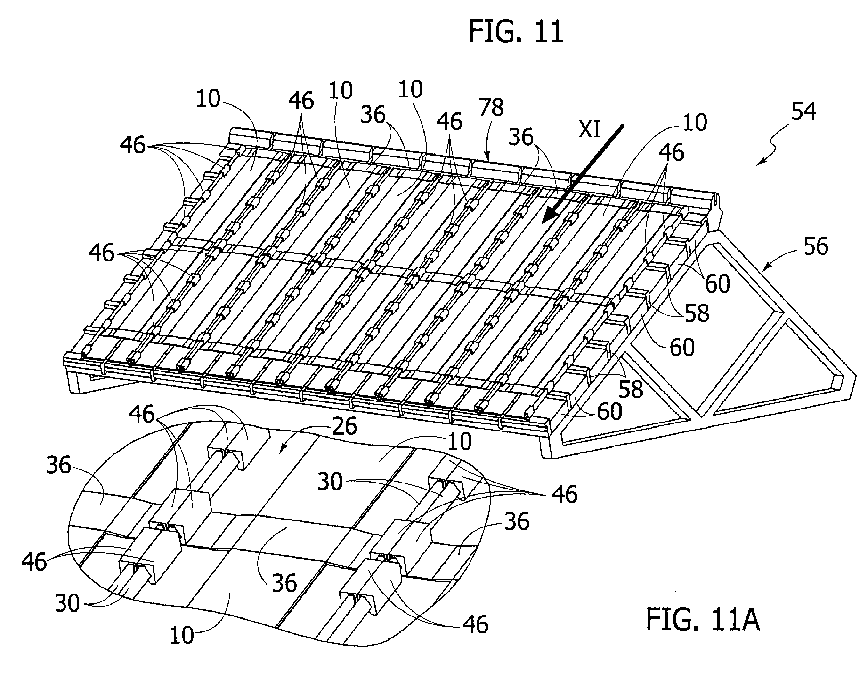

The joint coverings 36 are fixed to the roofing elements 26 by means of the anchoring brackets 46, which are positioned as illustrated in Figures 11 and 11a. The anchoring brackets 46 are engaged on the side walls 30 of the roofing elements 26 and fix the edges 44 of the joint coverings 36 to the respective side walls 30.

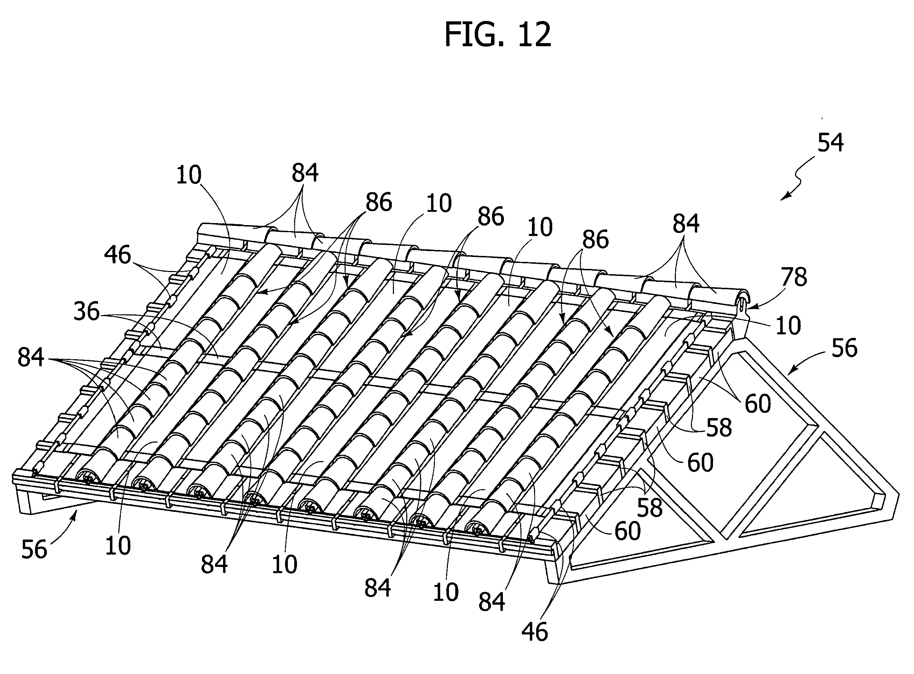

With reference to Figure 12, the construction of the roof is completed with the application of curved tiles 84. The curved tiles 84 are set in linear arrays 86 parallel to one another and oriented along the line of maximum inclination of the pitch. In each array 86, the curved tiles 84 are partially set on top of one another according to a conventional technique in the construction of roofs with curved tiles. The arrays 86 are set so that they cover the side walls 30 of the roofing elements 26. Also the ridge pole 78 is covered by curved tiles 84.

Each array 86 covers the free space in a transverse direction between the photovoltaic modules 10. The finished roof is hence formed by an alternation of arrays of curved tiles and of strip-shaped solar modules. The width of the photovoltaic modules 10 is substantially equal to the width of the arrays 86.

The roofing elements 26 on which the solar modules 10 are positioned increase the insulation of the roof and moreover constitute an insulating structure for the solar modules 10. The heat in excess of the photovoltaic cells 12 is transferred to the thermovective fluid that circulates within the channels of the roll-bond panels 14. Said fluid can be used for the production of hot water for sanitary purposes. The presence of the roll-bond panel 14 improves the efficiency of the photovoltaic cells 12 given that it reduces the negative effects of the temperature on the efficiency of the photovoltaic cells 12.

## Claims

1. A building roof, having at least one inclined pitch comprising a plurality of linear arrays (86) of curved tiles (84), said arrays (86) being parallel to and set at a distance from one another in a transverse direction, said roof being **characterized in that** it comprises a plurality of strip-shaped solar modules (10) set between said adjacent arrays (86) of curved tiles (84).

2. The roof according to Claim 1, **characterized in that** it comprises a base structure (54), applied on which is a plurality of roofing elements (26) adjacent to one another and oriented in a direction of maximum inclination of the pitch.

3. The roof according to Claim 2, **characterized in that** the base structure (54) comprises a plurality of horizontal laths (58), set between which are layers of insulating material (60).

4. The roof according to any one of the preceding claims, **characterized in that** each of said solar modules (10) has a width substantially equal to the distance between the adjacent arrays (86) of curved tiles (84).

5. The roof according to any one of the preceding claims, **characterized in that** each of said solar modules (10) comprises a base (14), set on which is a single array of photovoltaic cells (12).

6. The roof according to Claim 5, **characterized in that** the base comprises a roll-bond panel (14) equipped with channels for a thermovective fluid.

7. The roof according to Claim 2, **characterized in that** it comprises a plurality of joint coverings (36) set at the ends of said solar modules (10), each of said joint coverings (36) having side ends (44) anchored to corresponding side walls (30) of a respective roofing element (26).

8. A solar module for conversion of solar radiation into electrical or thermo-electrical energy, **characterized in that** it has substantially the form of an elongated strip.

9. The solar module according to Claim 8,
**characterized in that** it comprises a single array of photovoltaic cells (12).

10. The solar module according to Claim 9,
**characterized in that** it comprises a roll-bond panel (14) equipped with channels for the circulation of a thermovective fluid, on which said array of photovoltaic cells (12) is applied.

11. The solar module according to Claim 10,
**characterized in that** said array of photovoltaic cells (12) is fixed on a surface of said roll-bond panel (14) by means of a layer made of thermoplastic material (20).

## Amended claims

### Amended claims in accordance with Rule 137(2) EPC.

**1.** A building roof, having at least one inclined pitch comprising a plurality of linear arrays (86) of curved tiles (84), said arrays (86) being parallel to and set at a distance from one another in a transverse direction, **characterized in that** said plurality of linear arrays of curved tiles are set with their concave surfaces facing downwards, parallel to and set at a distance from one another and set according to the lines of maximum inclination of the roof and that a plurality of strip-shaped solar modules (10) are set between said adjacent arrays (86) of curved tiles (84).

**2.** The roof according to Claim 1, **characterized in that** it comprises a base structure (54), applied on which is a plurality of roofing elements (26) adjacent to one another and oriented in a direction of maximum inclination of the pitch.

**3.** The roof according to Claim 2, **characterized in that** the base structure (54) comprises a plurality of horizontal laths (58), set between which are layers of insulating material (60).

**4.** The roof according to any one of the preceding claims, **characterized in that** each of said solar modules (10) has a width substantially equal to the distance between the adjacent arrays (86) of curved tiles (84).

**5.** The roof according to any one of the preceding claims, **characterized in that** each of said solar modules (10) comprises a base (14), set on which is a single array of photovoltaic cells (12).

**6.** The roof according to Claim 5, **characterized in that** the base comprises a roll-bond panel (14) equipped with channels for a thermovective fluid.

**7.** The roof according to Claim 2, **characterized in that** it comprises a plurality of joint coverings (36) set at the ends of said solar modules (10), each of said joint coverings (36) having side ends (44) anchored to corresponding side walls (30) of a respective roofing element (26).
